# EUROPEAN PATENT SPECIFICATION

(11) **EP 2 317 444 B1**
(45) Date of publication and mention of the grant of the patent: **15.08.2012**
(21) Application number: 09174151.2
(22) Date of filing: 27.10.2009
(51) Int. Cl.: G06F 13/16

(54) **Flash memory accessing apparatus and an accessing method thereof**
Flash-Speicherzugangsvorrichtung und Zugangsverfahren dafür
Appareil d'accès à mémoire flash et son procédé d'accès

(43) Date of publication of application: 04.05.2011
(73) Proprietor: Giga-Byte Technology Co., Ltd., Taipei 231 (TW)
(72) Inventor: Chen, Chen-shun, Hsin Tien, Taipei County 231 (TW); Lin, Hou-Yuan, Hsin Tien, Taipei County 231 (TW)
(74) Representative: Schwerbrock, Florian

(56) References cited:
- US-A1- 2009 164 703
- ONFI Workgroup: "Open NAND Flash Interface Specification, Revision 2.2" 7 October 2009 (2009-10-07), XP002576107 Retrieved from the Internet: URL:www.onfi.org> [retrieved on 2010-03-26]

## Description

### BACKGROUND OF THE INVENTION

### 1. Field of the Invention

The present invention relates to a flash memory accessing apparatus and an accessing method thereof. More particularly, the present invention relates to an accessing apparatus for expanding an open NAND flash interface, and an accessing method thereof.

### 2. Description of Related Art

In the past, NAND flash memories are manufactured by many suppliers. Though the NAND flash memories manufactured by different suppliers may have similar packages, input/output pins and similar control command sets, each time when the NAND flash memories manufactured by different suppliers are replaced, firmware adjustments are necessary.

Accordingly, some major suppliers jointly put forward a so-called open NAND flash interface (which is referred to as ONFI hereinafter) standard for providing a standard specification and interface for the NAND flash memory. However, according to the ONFI standard, a controller of the flash memory only provides one set of ONFI signal line. Therefore, if two sets of flash memories are used, the ONFI signal line of the controller of the flash memory has to be dissembled into two sets for utilization, which may cause a great limitation in utilization.

An interface that is ONFI-compliant is disclosed in US-A-2009/164703.

### SUMMARY OF THE INVENTION

The present invention is directed to a flash memory accessing apparatus and an accessing method thereof, which are used for expanding a flash memory on an open NAND flash interface (ONFI).

The present invention provides a flash memory accessing apparatus including a memory controller, a first ONFI and an expanding flash memory module. The first ONFI is coupled to the memory controller, and is used for connecting a main flash memory module. The expanding flash memory module is coupled to the memory controller and the first ONFI. Wherein, the memory controller obtains a detecting result by detecting whether the main flash memory module connected to the first ONFI and the expanding flash memory module are single side or double side. The memory controller further configures an accessing method of the main flash memory module and the expanding flash memory module according to the detecting result.

In an embodiment of the present invention, when the memory controller detects that the main flash memory module and the expanding flash memory module are all single side, the memory controller connects the main flash memory module and the expanding flash memory module to form a dual channel flash memory module.

In an embodiment of the present invention, when the memory controller detects that the main flash memory module and the expanding flash memory module are all double side, the memory controller configures one of the main flash memory module and the expanding flash memory module as a working memory, and configures another one of the main flash memory module and the expanding flash memory module as a spare memory.

In an embodiment of the present invention, the memory controller further disables the spare memory.

In an embodiment of the present invention, the memory controller further detects whether a read or a write operation of the working memory is normal.

In an embodiment of the present invention, when the memory controller detects that the read or the write operation of the working memory is abnormal, the memory controller disables the working memory, and switches the spare memory to serve as the working memory.

In an embodiment of the present invention, the memory controller, the first ONFI and an expanding flash memory interface are all disposed on a motherboard.

In an embodiment of the present invention, the flash memory accessing apparatus further includes an expanding flash memory interface. The expanding flash memory interface is coupled to the memory controller and the first ONFI, and is used for connecting the expanding flash memory module.

In an embodiment of the present invention, the memory controller, the first ONFI and the expanding flash memory interface are disposed on a motherboard, and the expanding flash memory interface is a second ONFI.

In an embodiment of the present invention, the expanding flash memory module is directly disposed on a motherboard, and the memory controller and the first ONFI are disposed on the motherboard.

The present invention provides a flash memory accessing method. First, a first ONFI is provided to connect a main flash memory module, and an expanding flash memory module is provided. Next, whether the main flash memory module connected to the first ONFI and the expanding flash memory module are single side or double side is detected to obtain a detecting result. Next, an accessing method of the main flash memory module and the expanding flash memory module is configured according to the detecting result.

In the present invention, besides the ONFI, the expanding flash memory interface is further provided to expand a capacity of the flash memory, and by detecting a single/double side state of the main flash memory module on the ONFI and the expanding flash memory module on the expanding flash memory interface, the accessing method of the main flash memory module and the expanding flash memory module is configured. Therefore, application of the expanding flash memory module and the main flash memory module is effectively optimized.

In order to make the aforementioned and other features and advantages of the present invention comprehensible, several exemplary embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1A is a schematic diagram illustrating a flash memory accessing apparatus 100 according to an embodiment of the present invention.

FIG. 1B and FIG. 1C are schematic diagrams illustrating different approaches of configuring a flash memory accessing apparatus 100 on a motherboard according to an embodiment of the present invention.

FIG. 2 is a flowchart illustrating a flash memory accessing method according to an embodiment of the present invention.

### DESCRIPTION OF THE EMBODIMENTS

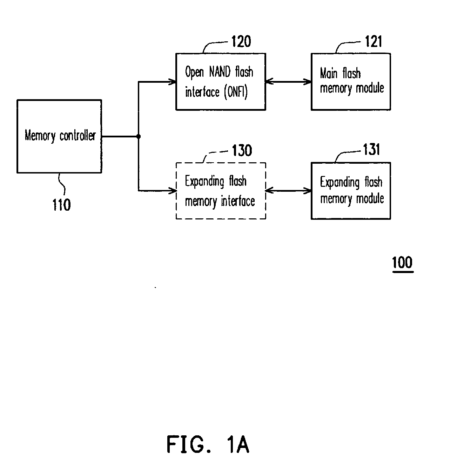

Referring to FIG. 1A, FIG. 1A is a schematic diagram illustrating a flash memory accessing apparatus 100 according to an embodiment of the present invention. The flash memory accessing apparatus 100 includes a memory controller 110, an open NAND flash interface (ONFI) 120 and an expanding flash memory interface 130. The ONFI 120 is coupled to the memory controller 110, and is used for connecting a main flash memory module 121. The expanding flash memory interface 130 is also coupled to the memory controller 110, and is used for connecting an expanding flash memory module 131.

After the main flash memory module 121 is connected to the ONFI 120 and the expanding flash memory module 131 is connected to the expanding flash memory interface 130, the memory controller 110 detects whether the main flash memory module 121 and the expanding flash memory module 131 respectively connected to the ONFI 120 and the expanding flash memory interface 130 are single side memory modules or double side memory modules to obtain a detecting result.

When the detecting result obtained by the memory controller 110 indicates that the main flash memory module 121 and the expanding flash memory module 131 are all the single side memory modules, it represent that a control signal line provided by the memory controller 110 is enough to simultaneously access the main flash memory module 121 and the expanding flash memory module 131. Therefore, the memory controller 110 connects the main flash memory module 121 and the expanding flash memory module 131 to form a so-called dual channel flash memory module. In case of the dual channel flash memory module, the memory controller 110 divides data to be stored into two parts, and simultaneously stores the divided two parts into the main flash memory module 121 and the expanding flash memory module 131, respectively, which can effectively increase a data storing speed. Comparatively, when data is read, two parts of data can be simultaneously read from the main flash memory module 121 and the expanding flash memory module 131, and the memory controller 110 combines the two parts of data to obtain an original stored data. Similarly, a data reading speed is increased.

Moreover, when the detecting result obtained by the memory controller 110 indicates that the main flash memory module 121 and the expanding flash memory module 131 are all the double side memory modules, the memory controller 110 configures one of the main flash memory module 121 and the expanding flash memory module 131 as a working memory, and configures another one of the main flash memory module 121 and the expanding flash memory module 131 as a spare memory. Namely, when the main flash memory module 121 and the expanding flash memory module 131 are all the double side memory modules, only one of the memories can be accessed (the one configured as the working memory), and the other one of the memories is configured as the spare memory and cannot be accessed.

For example, when the detecting result obtained by the memory controller 110 indicates that the main flash memory module 121 and the expanding flash memory module 131 are all the double side memory modules, the memory controller 110 configures the main flash memory module 121 as the working memory for accessing, and configures the expanding flash memory module 131 as the spare memory, and disables the spare memory (the expanding flash memory module 131).

Moreover, the memory controller 110 further performs a read/write test on the flash memory module used as the working memory, so as to detect whether the flash memory module used as the working memory is damaged. When the read/write test performed on the flash memory module used as the working memory (for example, the main flash memory module 121) cannot be normally executed, it represents that the main flash memory module 121 is damaged. Then, the memory controller 110 switches the expanding flash memory module 131 originally used as the spare memory to the working memory, and disables the main flash memory module 121 originally used as the working memory.

The memory controller 110 can perform the read/write test to the working memory according to a fixed time period. Namely, the memory controller 110 performs the read/write test on the working memory to detect whether the flash memory module used as the working memory is damaged every the fixed time period.

On the other hand, the memory controller 110 can further configure the expanding flash memory module 131 to serve as a spare memory of the main flash memory module 121. Namely, besides storing data to the main flash memory module 121, the data can also be stored in the expanding flash memory module 131 as a backup. A method to backup the data in the main flash memory module 121 is that the memory controller 110 copies the data in the main flash memory module 121 to the expanding flash memory module 131 every a fixed time period. Calculation of the fixed time period can be implemented by hardware or software. Moreover, the flash memory accessing apparatus 100 can provide a software interface for a user to set or change the fixed time period.

It should be noticed that the memory controller 110, the ONFI 120 and the expanding flash memory interface 130 can be simultaneously disposed on a same circuit substrate (for example, a motherboard). Alternatively, the expanding flash memory interface 130 is not used, and the expanding flash memory module 131 is directly disposed on the motherboard.

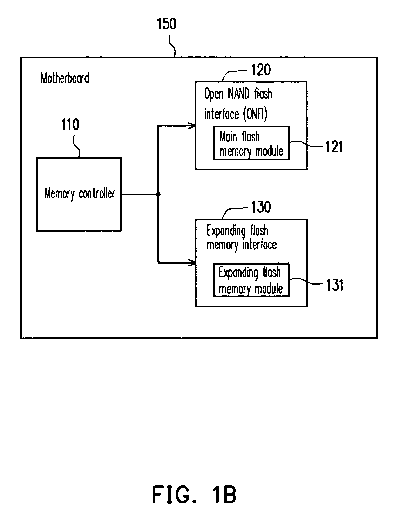

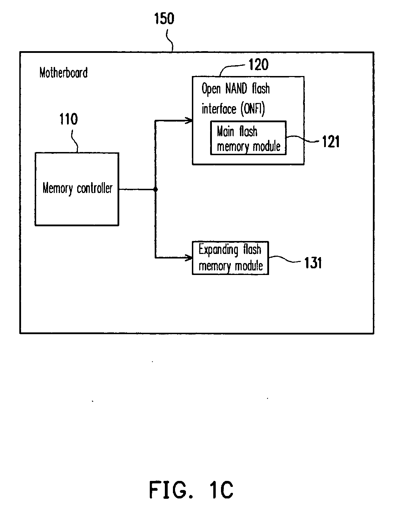

Referring to FIG. 1B and FIG. 1C for methods of disposing the flash memory accessing apparatus 100 on the motherboard. In FIG. 1B, the memory controller 110, the ONFI 120 and the expanding flash memory interface 130 are all disposed on the motherboard 150. The main flash memory module 121 is connected to the motherboard 150 through the ONFI 120, and the expanding flash memory module 131 is connected to the motherboard 150 through the expanding flash memory interface 130.

Moreover, in FIG. 1C, the memory controller 110 and the ONFI 120 are disposed on the motherboard 150, while the expanding flash memory interface 130 shown in FIG. 1B is not disposed on the motherboard 150. Comparatively, the expanding flash memory module 131 is directly disposed on the motherboard 150, which forms a so-called onboard flash memory module.

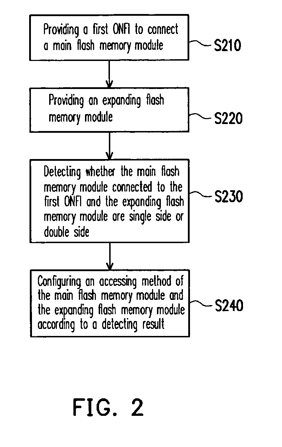

Referring to FIG. 2, FIG. 2 is a flowchart illustrating a flash memory accessing method according to an embodiment of the present invention. The method includes following steps. First, a first ONFI is provided to connect a main flash memory module (step S210), and an expanding flash memory module is provided (S220). Next, after the main flash memory module and the expanding flash memory module are connected, it is detected whether the main flash memory module connected to the first ONFI and the expanding flash memory module are single side or double side, so as to obtain a detecting result (S230). Next, an accessing method of the main flash memory module and the expanding flash memory module is configured according to the detecting result (S240).

It should be noticed that obtaining of the detecting result and configuration of the accessing method of the main flash memory module and the expanding flash memory module can all be implemented by a memory controller. Implementation of the memory controller is the same to the above described memory controller 110 in the flash memory accessing apparatus 100, and therefore detailed descriptions thereof are not repeated.

In summary, in the present invention, the accessing method of the main flash memory module and the expanding flash memory module can be configured by detecting whether the main flash memory module and the expanding flash memory module are single side or double side. Therefore, a memory volume of the ONFI is effectively expanded, and the main flash memory module and the expanding flash memory module can be efficiently used, so that an accessing bandwidth can be increased, and backup of stored data is achieved.

It will be apparent to those skilled in the art that various modifications and variations can be made to the structure of the present invention without departing from the scope of the invention.

## Claims

1. A flash memory accessing apparatus (100), comprising:
a memory controller (110);
a first open NAND flash interface (ONFI) (120), coupled to the memory controller (110) for connecting a main flash memory module (121); and
an expanding flash memory module (131), coupled to the memory controller (110) and the first ONFI,
**characterized by** the memory controller (110) obtains a detecting result by detecting whether the main flash memory module (121) connected to the first ONFI and the expanding flash memory module (131) are single side or double side, and configures an accessing method of the main flash memory module (121) and the expanding flash memory module (131) according to the detecting result.

2. The flash memory accessing apparatus (100) as claimed in claim 1, wherein when the memory controller (110) detects that the main flash memory module (121) and the expanding flash memory module (131) are all single side, the memory controller (110) connects the main flash memory module (121) and the expanding flash memory module (131) to form a dual channel flash memory module.

3. The flash memory accessing apparatus (100) as claimed in claim 1, wherein when the memory controller (110) detects that the main flash memory module (121) and the expanding flash memory module (131) are all double side, the memory controller (110) configures one of the main flash memory module (121) and the expanding flash memory module (131) as a working memory, and configures another one of the main flash memory module (121) and the expanding flash memory module (131) as a spare memory.

4. The flash memory accessing apparatus (100) as claimed in claim 3, wherein the memory controller (110) further disables the spare memory.

5. The flash memory accessing apparatus (100) as claimed in claim 3, wherein the memory controller (110) further detects whether a read or a write operation of the working memory is normal.

6. The flash memory accessing apparatus (100) as claimed in claim 5, wherein when the memory controller (110) detects that the read or the write operation of the working memory is abnormal, the memory controller (110) disables the working memory, and switches the spare memory to serve as the working memory.

7. The flash memory accessing apparatus (100) as claimed in claim 1, further comprising:
an expanding flash memory interface (130), coupled to the memory controller (110) and the first ONFI for connecting the expanding flash memory module (131).

8. The flash memory accessing apparatus (100) as claimed in claim 7, wherein the memory controller (110), the first ONFI and the expanding flash memory interface (130) are disposed on a motherboard (150), and the expanding flash memory interface (130) is a second ONFI.

9. The flash memory accessing apparatus (100) as claimed in claim 1, wherein the expanding flash memory module (131) is directly disposed on a motherboard (150), and the memory controller (110) and the first ONFI are disposed on the motherboard (150).

10. A flash memory accessing method, comprising:
providing a first ONFI to connect a main flash memory module (121);
providing an expanding flash memory module (131);
**characterized by** providing a memory controller (110) for detecting whether the main flash memory module (121) connected to the first ONFI and the expanding flash memory module (131) are single side or double side to obtain a detecting result; and providing a memory controller (110) for configuring an accessing method of the main flash memory module (121) and the expanding flash memory module (131) according to the detecting result.

11. The flash memory accessing method as claimed in claim 10, wherein the detecting result comprises:
the main flash memory module (121) and the expanding flash memory module (131) are all single side or the main flash memory module (121) and the expanding flash memory module (131) are all double side.

12. The flash memory accessing method as claimed in claim 11, wherein the step of configuring the accessing method of the main flash memory module (121) and the expanding flash memory module (131) according to the detecting result comprises:
when the detecting result is that the main flash memory module (121) and the expanding flash memory module (131) are all single side, a memory controller (110) connects the main flash memory module (121) and the expanding flash memory module (131) to form a dual channel flash memory module.

13. The flash memory accessing method as claimed in claim 12, wherein the step of configuring the accessing method of the main flash memory module (121) and the expanding flash memory module (131) according to the detecting result further comprises:
when the detecting result is that the main flash memory module (121) and the expanding flash memory module (131) are all double side, the memory controller (110) configures one of the main flash memory module (121) and the expanding flash memory module (131) as a working memory, and configures another one of the main flash memory module (121) and the expanding flash memory module (131) as a spare memory.

14. The flash memory accessing method as claimed in claim 13, further comprising:
providing a memory controller (110) for detecting whether a read or a write operation of the working memory is normal.

15. The flash memory accessing method as claimed in claim 14, further comprising:
providing a memory controller (110) for disabling the working memory, and switching the spare memory to serve as the working memory by the memory controller (110) when the memory controller (110) detects that the read or the write operation of the working memory is abnormal.

16. The flash memory accessing method as claimed in claim 10, further comprising:
providing an expanding flash memory interface (130) to connect the expanding flash memory module (131).

## Patentansprüche

1. Eine Flash-Speicher-Zugriffsvorrichtung (100), welche Folgendes umfasst:
Einen Speicher-Controller (110);
Eine erste offene NAND-Flash-Schnittstelle (ONFI) (120), gekoppelt mit dem Speicher-Controller (110) zum Verbinden eines Haupt-Flash-Speichermoduls (121) und
Eine expandierendes Flash-Speichermodul (131), das mit dem Speicher-Controller (110) und dem ersten ONFI gekoppelt ist,
**dadurch gekennzeichnet, dass** der Speicher-Controller (110) ein Detektions-Ergebnis durch Detektieren davon, ob das Haupt-Flash-Speichermodul (121), welches mit dem ersten ONFI und dem expandierenden ONFI-Flash-Speichermodul (131) verbunden ist einseitig oder beidseitig ist, und dadurch, dass es es eine Zugriffsmethode zum Haupt-Flash-Speichermodul (121) und dem expandierenden Flash-Speichermodul (131) gemäß dem Ergebnis der Detektion konfiguriert.

2. Die Flash-Speicher-Zugriffsvorrichtung (100) gemäß Anspruch 1, wobei, wenn der Speicher-Controller (110) erfasst, dass das Haupt-Flash-Speichermodul (121) und das expandierende Flash-Speichermodul (131) alle einseitig sind, der Speicher-Controller (110) das Haupt-Flash-Speichermodul (121) und das expandierende Flash-Speichermodul (131) verbindet, um ein Zwei-Kanal-Flash-Speicher-Modul zu bilden.

3. Die Flash-Speicher-Zugriffsvorrichtung (100) gemäß Anspruch 1, wobei, wenn der Speicher-Controller (110) detektiert, dass das Haupt-Flash-Speichermodul (121) und das expandierende Flash-Speichermodul (131) alle doppelseitig sind, der Speicher-Controller (110) entweder das Haupt-Flash-Speichermodul (121) oder das expandierende Flash-Speichermodul (131) als Arbeitsspeicher konfiguriert und das andere Modul, also entweder das Haupt-Flash-Speichermodul (121) oder das expandierende Flash-Speichermodul (131), als Ersatzspeicher konfiguriert.

4. Eine Flash-Speicher-Zugriffsvorrichtung (100) nach Anspruch 3, wobei der Speicher-Controller (110) den Ersatzspeicher deaktiviert.

5. Eine Flash-Speicher-Zugriffsvorrichtung (100) nach Anspruch 3, wobei der Speicher-Controller (110) ferner erkennt, ob eine Lese- oder eine Schreiboperation des Arbeitsspeichers normal ist.

6. Eine Flash-Speicher-Zugriffsvorrichtung (100) nach Anspruch 5, wobei, wenn der Speicher-Controller (110) feststellt, dass die Lese- oder Schreiboperation des Arbeitsspeichers abnormal ist, der Speicher-Controller (110) den Arbeitsspeicher deaktiviert und zum Ersatzspeicher schaltet, damit dieser als Arbeitsspeicher dienen kann.

7. Eine Flash-Speicher-Zugriffsvorrichtung (100) nach Anspruch 1, welche ferner Folgendes umfasst:
Eine expandierendes Flash-Speichermodul (130), das mit dem Speicher-Controller (110) und dem ersten ONFI zur Verbindung des expandierenden Flash-Speicher-Moduls (131) gekoppelt ist,

8. Eine Flash-Speicher-Zugriffsvorrichtung (100) nach Anspruch 7, wobei der Speicher-Controller (110) das erste ONFI und die expandierende Flash-Speicher-Schnittstelle (130) auf einer Platine (150) positioniert sind und das expandierende Flash-Speicher-Interface (130) das zweite ONFI darstellt. erkennt, ob eine Lese- oder eine Schreiboperation des Arbeitsspeichers normal ist.

9. Eine Flash-Speicher-Zugriffsvorrichtung (100) nach Anspruch 1, wobei der expandierende Flash-Speicher (131) direkt auf einer Platine (150) positioniert ist und der Speicher-Controller (110) und das erste ONFI ebenfalls auf der Platine positioniert sind.

10. Eine Flash-Memory-Zugriffsmethode, welche Folgendes umfasst:
ein erstes ONFI zur Verbindung eines Haupt-Flash-Speichermoduls (121);
ein expandierendes Flash-Speichermodul (131);
**gekennzeichnet durch** das Bereitstellen eines Speicher-Controllers (110) zum Detektieren, ob das Haupt-Flash-Speichermodul (121), das mit dem ersten ONFI und dem expandierenden Flash-Speichermodul (131) verbunden ist, einseitig oder beidseitig ist; und außerdem **durch** das Bereitstellen eines Speichers-Controller (110) zum Konfigurieren eines Zugriffsverfahren des Haupt-Flash-Speichermoduls (121) und des expandierenden Flash-Speichermoduls (131) gemäß dem Ergebnis der Detektion.

11. Eine Flash-Memory-Zugriffsvorrichtung (100) nach Anspruch 10, wobei das Detektions-Ergebnis Folgendes umfasst:
die Haupt-Flash-Speichermodul (121) und das expandierende Flash-Speichermodul (131) sind alle einseitig oder das Haupt-Flash-Speichermodul (121) und das expandierende Flash-Speichermodul (131) sind alle beidseitig.

12. Die Flash-Speicher-Zugriffmethode nach Anspruch 11, wobei der Schritt des Konfigurierens des Zugriffsverfahren des Haupt-Flash-Speichermodul (121) und des expandierenden Flash-Speichermodul (131) nach dem Ergebnis der Detektion Folgendes umfasst:
wenn das Detektion-Ergebnis so ausfällt, dass das Haupt-Flash-Speichermodul (121) und das expandierende Flash-Speichermodul (131) alle einseitig sind, verbindet ein Speicher-Controller (110) das Haupt-Flash-Speichermodul (121) und das expandierende Flash-Speichermodul (131) zur Bildung eines Zwei-Kanal-Flash-Speichermoduls.

13. Die Flash-Speicher-Zugriffmethode nach Anspruch 12, wobei der Schritt des Konfigurierens des Zugriffsverfahrens des Haupt-Flash-Speichermoduls (121) und des expandierenden Flash-Speichermoduls (131) nach dem Ergebnis der Detektion ferner Folgendes umfasst:
wenn das Detektions-Ergebnis ist, dass das Haupt-Flash-Speichermodul (121) und das expandierende Flash-Speichermodul (131) alle doppelseitig sind, konfiguriert der Speicher-Controller (110) eines der beiden, das Haupt-Flash-Speichermodul (121) oder das expandierende Flash-Speichermodul (131), als einen Arbeitsspeicher und konfiguriert ein anderes, das Haupt-Flash-Speichermodul (121) oder das expandierende Flash-Speichermodul (131), als Ersatzspeicher.

14. Eine Flash-Memory-Zugriffsmethode nach Anspruch 13, welche ferner Folgendes umfasst:
Bereitstellen eines Speicher-Controllers (110) zum Detektieren, ob eine Lese- oder eine Schreiboperation des Arbeitsspeichers normal ist.

15. Eine Flash-Memory-Zugriffsmethode nach Anspruch 14, welche ferner Folgendes umfasst:
Bereitstellen eines Speicher-Controllers (110) zum Deaktivieren des Arbeitsspeichers und Umschalten des Ersatzspeichers durch den Speicher-Controller (110), um als Arbeitsspeicher zu dienen, wenn der Speicher-Controller (110) detektiert, dass die Lese- oder Schreiboperation des Arbeitsspeichers nicht normal ist.

16. Eine Flash-Memory-Zugriffsmethode nach Anspruch 10, welche ferner Folgendes umfasst:
Bereitstellen einer expandierenden Flash-Speicher-Schnittstelle (130), um das expandierende Flash-Speichermodul (131) zu verbinden.

## Revendications

1. Un appareil d'accès de la mémoire flash (100), comprenant :
un contrôleur de mémoire (110) ;
une première interface flash NAND (ONFI) (120), couplée au contrôleur de mémoire (110) pour connecter un module de mémoire flash principal (121) ; et
un module d'extension de mémoire flash (131), couplé au contrôleur de mémoire (110) et la première ONFI,
**caractérisé par** le contrôleur de mémoire (110) obtient un résultat de détection en détectant si le module de mémoire flash principal (121) connecté à la première ONFI et le module d'extension de mémoire flash (131) sont avec une seule côté ou deux côtés, et configure un procédé d'accès du module de mémoire flash principal (121) et du module d'extension de mémoire flash (131) selon le résultat de détection.

2. L'appareil d'accès de la mémoire flash (100) comme exigé par l'exigence 1, dans lequel lorsque le contrôler de mémoire (110) détecte que le module de mémoire flash principal (121) et le module d'extension de mémoire flash (131) sont tous avec une seule côté, le contrôleur de mémoire (110) connecte le module de mémoire flash principal (121) et le module d'extension de mémoire flash (131) pour former un module de mémoire flash à double canal.

3. L'appareil d'accès de la mémoire flash (100) comme exigé par l'exigence 1, dans lequel lorsque le contrôler de mémoire (110) détecte que le module de mémoire flash principal (121) et le module d'extension de mémoire flash (131) sont tous avec deux côté, le contrôleur de mémoire (110) configure le module de mémoire flash principal (121) et le module d'extension de mémoire flash (131) comme mémoire de travail, et configure un autre du module de mémoire flash principal (121) et le module d'extension de mémoire flash (131) comme mémoire de réserve.

4. L'appareil d'accès de la mémoire flash (100) comme exigé par l'exigence 3, dans lequel le contrôleur de mémoire (110) désactive en outre la mémoire de réserve.

5. L'appareil d'accès de la mémoire flash (100) comme exigé par l'exigence 3, dans lequel le contrôleur de mémoire (110) détecte en outre si une opération de lecture ou d'écriture de la mémoire de travail est normale.

6. L'appareil d'accès de la mémoire flash (100) comme exigé par l'exigence 1, dans lequel lorsque le contrôler de mémoire (110) détecte qu'une opération de lecture ou d'écriture de la mémoire de travail est anormale, le contrôleur de mémoire (110) désactive la mémoire de travail et bascule vers la mémoire de réserve pour servir comme mémoire de travail.

7. L'appareil d'accès de la mémoire flash (100) comme exigé par l'exigence 1, comprenant en outre :
une interface d'extension de mémoire flash (130), couplé au contrôleur de mémoire (110) et la première ONFI, pour connecter le module d'extension de mémoire flash (131).

8. L'appareil d'accès de la mémoire flash (100) comme exigé par l'exigence 7, dans lequel le contrôleur de mémoire (110), la première ONFI et l'interface d'extension de mémoire flash (130) sont disposés sur une carte mère (150), et l'interface d'extension de mémoire flash (130) est la deuxième ONFI.

9. L'appareil d'accès de la mémoire flash (100) comme exigé par l'exigence 1, dans lequel le module d'extension de mémoire flash (131) est directement disposé sur une carte mère (150), et le contrôleur de mémoire (110) et la première ONFI sont disposés sur une carte mère (150).

10. Un procédé d'accès de la mémoire flash, comprenant :
la fourniture d'une première ONFI pour connecter un module de mémoire flash principal (121) ;
la fourniture d'un module d'extension de mémoire flash(131) ;
**caractérisé par** la fourniture d'un contrôleur de mémoire (110) pour détecter si le module de mémoire flash principal (121) connecté à la première ONFI et le module d'extension de mémoire flash (131) sont avec une seule côté ou deux côtés pour obtenir un résultat de détection ; et la fourniture d'un contrôleur de mémoire (110) pour configurer un procédé d'accès du module de mémoire flash principal (121) et du module de d'extension mémoire flash (131) selon le résultat de détection.

11. Le procédé d'accès de la mémoire flash comme exigé par l'exigence 10, dans lequel le résultat de détection comprend :
le module de mémoire flash principal (121) et le module d'extension de mémoire flash (131) sont tous avec une seule côté ou le module de mémoire flash principal (121) et le module d'extension de mémoire flash (131) sont tous avec deux côtés.

12. Le procédé d'accès de la mémoire flash comme exigé par l'exigence 11, dans lequel l'étape de configuration du procédé d'accès du module de mémoire flash principal (121) et le module d'extension de mémoire flash (131) selon le résultat de détection comprend :
Lorsque le résultat de détection est que le module de mémoire flash principal (121) et le module d'extension de mémoire flash (131) sont tous avec une seule côté, un contrôleur de mémoire (110) connecte le module de mémoire flash principal (121) et le module d'extension de mémoire flash (131) pour former un module de mémoire flash à double canal.

13. Le procédé d'accès de la mémoire flash comme exigé par l'exigence 12, dans lequel l'étape de configuration du procédé d'accès du module de mémoire flash principal (121) et le module d'extension de mémoire flash (131) selon le résultat de détection comprend en outre :
lorsque le résultat de détection est que le module de mémoire flash principal (121) et le module d'extension de mémoire flash (131) sont tous avec deux côtés, le contrôleur de mémoire (110) configure un des modules de mémoire flash principaux (121) et le module d'extension de mémoire flash (131) comme mémoire de travail, et configure un autre des modules de mémoire flash principaux (121) et le module d'extension de mémoire flash (131) comme mémoire de réserve.

14. Le procédé d'accès de la mémoire flash comme exigé par l'exigence 13, comprenant en outre :
la fourniture d'un contrôleur de mémoire (110) pour détecter si une opération de lecture ou d'écriture de la mémoire de travail est normale.

15. Le procédé d'accès de la mémoire flash comme exigé par l'exigence 14, comprenant en outre :
la fourniture d'un contrôleur de mémoire (110) pour désactiver la mémoire de travail et basculer vers la mémoire de réserve pour servir comme mémoire de travail par le contrôleur de mémoire (110) lorsque le contrôleur de mémoire (110) détecte qu'une opération de lecture ou d'écriture de la mémoire de travail est anormale.

16. Le procédé d'accès de la mémoire flash comme exigé par l'exigence 10, comprenant en outre :
la fourniture d'une interface d'extension de mémoire flash (130) pour connecter le module d'extension de mémoire flash (131).
